(19)

**Europäisches Patentamt**

**European Patent Office**

**Office européen des brevets**

(11) **EP 4 082 966 A1**

(12) **EUROPEAN PATENT APPLICATION**

(43) Date of publication:
**02.11.2022 Bulletin 2022/44**

(21) Application number: **21382359.4**

(22) Date of filing: **26.04.2021**

(51) International Patent Classification (IPC):
**C01B 33/037** *(2006.01)*

(52) Cooperative Patent Classification (CPC):
**C01B 33/037**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ferroglobe Innovation, S.L.**
**28046 Madrid (ES)**

(72) Inventors:
- **MIGUEZ, José Manuel**
  **28046 MADRID (ES)**
- **RIVAT, Pascal**
  **28046 MADRID (ES)**

- **BERTHOLLET, Damien**
  **28046 MADRID (ES)**
- **VARELA, Gonzalo**
  **28046 MADRID (ES)**
- **DIEGUEZ, Joaquín**
  **28046 MADRID (ES)**
- **ORDÁS, Ramón**
  **28046 MADRID (ES)**
- **COCCO, François**
  **28046 MADRID (ES)**
- **FAY, Aurélie**
  **28046 MADRID (ES)**

(74) Representative: **Ungria López, Javier**
**Avda. Ramón y Cajal, 78**
**28043 Madrid (ES)**

(54) **METHOD FOR OBTAINING PURIFIED SILICON METAL**

(57) The present invention refers to a method for obtaining purified silicon metal, the method comprising the steps of providing liquid silicon in a crystallisation mould wherein the crystallisation mould comprises crucible-lined walls; solidifying the liquid silicon by unidirectional solidification from the crucible-lined walls of the mould while stirring the liquid silicon by means of electromagnetic stirring (EMS); stopping the unidirectional solidification when a percentage of the liquid silicon has solidified; decanting the excess liquid silicon; and removing the solid silicon metal ingot from the crystallisation mould. The invention further refers to a device comprising a crystallisation mould; an electromagnetic stirrer; and a decanting mechanism. Finally, the invention recites the use of the device in a method for obtaining purified silicon metal.

MELTING UNIT          SOLIDIFICATION UNIT

ELECTROMAGNETIC STIRRER

STRUCTURE AND TILTER

CRUCCIBLE

DRAGGING MECHANISM

**FIGURE 6A**

EP 4 082 966 A1

**Description**

**FIELD OF THE INVENTION**

The present invention relates to the production of solid silicon metal. In particular, the invention refers to a method for obtaining purified solid silicon metal starting from silicon metal of lesser quality as a raw material.

**BACKGROUND OF THE INVENTION**

New applications of silicon metal have typically required raw materials of an increasingly higher purity grade. This trend was initiated in the nineties when it was necessary to improve the homogeneity and iron content of silicon metal for chemical grade silicon, which is used in the production of silicones. About ten years later, silicon photovoltaic (PV) technology required silicon metal of still higher purity, which became known as polysilicon grade silicon. The scarcity of high purity silicon in the period of 2005-2010 attracted the most important metallurgical silicon producers to develop metallurgical processes capable of achieving the 99,9999% purity (6N) which was the specification for Solar Grade Silicon. In the last few years, new applications of silicon metal (anodes for batteries, thermoelectrical generators or coolers, advanced ceramics, etc.) demand higher purity grades and/or customised compositions. Some of the purity grades currently available for a wide range of applications are listed below:

- Metallurgical grade Si: %Fe<0.5; %Ca<0.3; %Al<0.1.
- Chemical grade Si: %Fe<0.4; %Ca<0.1; Min<%Al<Max.
- Polysilicon grade Si: %Fe<0.3; %Ca<0.03; Min<%Al<Max; ppmw P<limit; ppmw B<limit; Trace elements< limit.
- Solar grade Si: %Fe<0.0001; %Ca<0.0001; %Al<0.0001; ppmw P<1; ppmw B<1; ppmw others< 10.

In addition, society is moving towards a more circular economy. This stance calls for new procedures that allow the recycling of off-spec silicon, waste from other industries (i.e., solar kerf loss), and/or scrap material. All those scrap materials tend to have high levels of impurities. Accordingly, it is usually necessary to purify said scrap materials so that they may be marketable for standard or new applications. In these regards, several methods of purifying metallurgical or low-grade silicon are known in the art.

In document US 4,094,731, liquid silicon is poured into a mould equipped with mechanical stirring (i.e., a carbon rod) and/or gas injection in order to wash the exposed surfaces of growing solid silicon crystals and to prevent the freezing of the top surface of the mother liquor, which allows for the removal of the excess liquid silicon when enough solid fraction has been achieved. Although the authors claim that this method is suitable for reducing iron (Fe) content to 1/20th of the initial content, their best example shows a decrease in iron (Fe) content from 0,48% to 0,12%. However, the average of the examples is from 0,53% to 0,24%, a decrease of less than 60% of the initial iron content. Additionally, the formation of silicon balls is reported, which substantially reduces the yield of the process. Finally, the graphite rod can contaminate the liquid silicon and it is an expensive consumable. Moreover, the use of air/ oxygen can potentially oxidize silicon, whereas inert gases are also expensive.

Also known in the art are documents BR102013005759 A2 and BRPI0806050 B1, which describe a method wherein a mould containing the mother liquor and the refined solid silicon is centrifuged to prevent the dendritic solidification that could trap impurities in the growing solid silicon phase. BR102013005759 A2 only provides examples in lab scale. The difficulty of implementing these inventions in an industrial setting lays in the step of rotating a heavy industrial mould filled with liquid silicon at a very fast speed to prevent dendritic solidification. BRPI0806050 A2 uses graphite electrodes to ensure that the top surface remains liquid. However, said graphite electrodes are an expensive consumable and can contaminate the liquid silicon.

Document US 4,747,906 discloses a process wherein silicon is melt in a mould and wherein solidification is performed on a cooled graphite rod rotating at a very high speed. The purification ratios achieved with this method are impressive (reduction of 99.9% of impurities). However, the process seems complex and expensive. On the one hand, the design of the machine is rather complex and the operations required to solidify and remove the solid part do not appear to be straightforward. On the other hand, the high consumption of inert gases, the fact that it is necessary to maintain silicon in liquid form during longer times compared to other solidification solutions and the need to use a new crucible for each batch process could necessarily result in higher costs.

Document WO 2009/033255A1 describes an alternative non-contact method to stir liquid silicon in a solidifying mould. According to this alternative method, liquid silicon is poured into a mould which is subjected to electromagnetic stirring in order to control heat extraction and dendrite formation. The authors are able to obtain low contaminant carbon concentrations due to the avoidance of graphite consumables for stirring. The examples show a decrease in iron content of 98%. Nevertheless, the method to remove the excess liquid silicon from the centre of the ingot is clearly cumbersome and potentially contaminant. Therefore, it seems difficult to replicate this process in an industrial setting.

In view of the above, there is a need in the art for an effective method for purifying solid silicon that avoids the use of potentially contaminant carbon tools (i.e., for stirring) and that is simple to operate and economical so that it can easily be implemented in an industrial setting.

## SUMMARY OF THE INVENTION

The inventors have developed a process that solves the above difficulties in the methods described in the state of the art. In this new method, liquid silicon is solidified in a crucible-lined crystallisation mould under non-contact stirring of the liquid silicon by means of electromagnetic stirring (EMS), up to a point where a specified percentage of the liquid silicon has solidified, such that a hollow ingot of solid silicon is obtained. This hollow ingot of solid silicon is of a higher purity grade, compared to the original silicon used as a raw material. On the other hand, the excess liquid silicon is enriched in the impurities initially present in the silicon raw material,

Thus, in a first aspect the invention relates to a method for obtaining purified silicon metal, the method comprising:

a) providing liquid silicon in a crystallisation mould having crucible-lined walls,
b) solidifying the liquid silicon by unidirectional solidification from the crucible-lined walls while stirring the liquid silicon by means of electromagnetic stirring (EMS), until a percentage of the liquid silicon solidifies; and
c) decanting the excess non-solidified liquid silicon.

In another aspect, the invention relates to a device, wherein the device comprises:

a) a crystallisation mould;
b) an electromagnetic stirrer; and
c) a decanting mechanism.

Additionally, the invention relates to the use of the crystallisation mould according to the present invention in a method for obtaining purified silicon metal.

## DESCRIPTION OF THE FIGURES

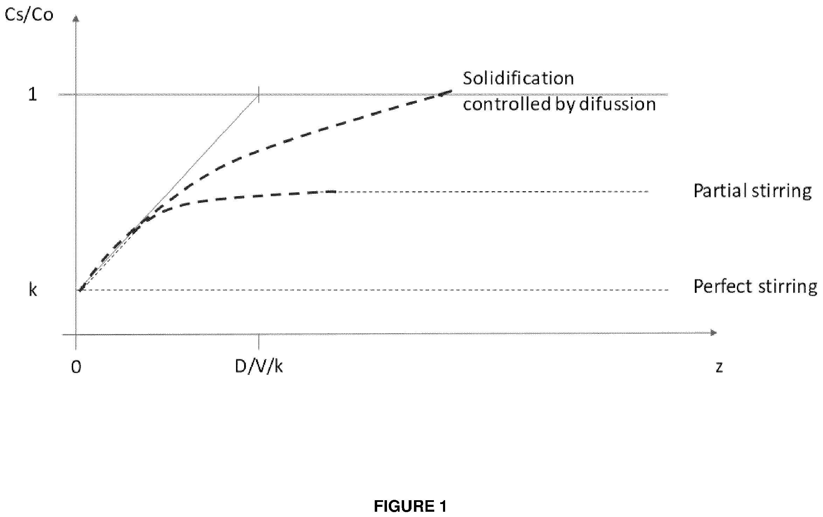

**Figure 1:** Diagram showing the effect of stirring on the solidification profile. $C_S$: Concentration of the solute in the solid; $C_O$: Initial concentration of the solute in the liquid; $k$: Segregation coefficient; $z$: distance in the direction of unidirectional solidification; D/V/k is a coefficient that represents the initial transient boundary layer, wherein D (or $D_L$) is the diffusivity of the impurity in the liquid, V (sometimes called R in the literature) is the growth rate of the solid, and k is the segregation coefficient of the impurity.

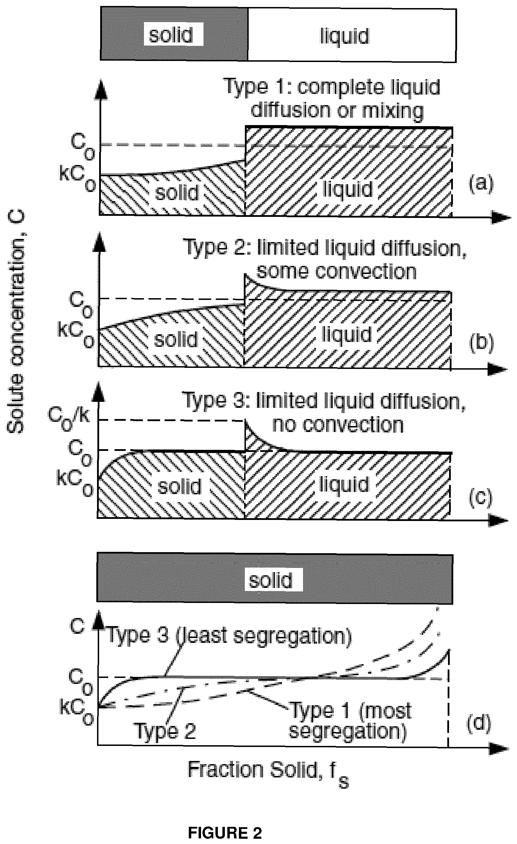

**Figure 2:** Solute redistributions in the absence of solid diffusion: (a) type 1; (b) type 2; (c) type 3; (d) resultant segregation profiles.

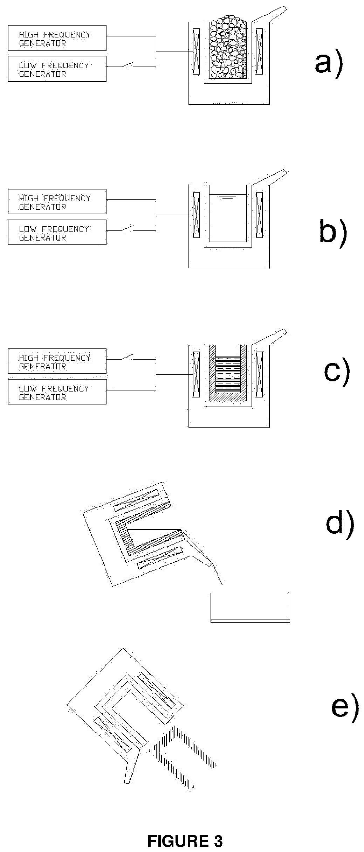

**Figure 3:** Schematic representation of the method of the invention, depicting the steps of (a) providing solid silicon in the melting furnace/ crystallisation mould of the invention, (b) melting the solid silicon by means of a high frequency generator, (c) solidifying the liquid silicon by unidirectional solidification from the walls of the mould while stirring the liquid silicon by means of electromagnetic stirring (EMS) with a low frequency generator, (d) stopping the unidirectional solidification when a percentage of the liquid silicon has solidified and decanting the excess liquid silicon; and (e) removing the solid silicon metal ingot from the crystallisation mould.

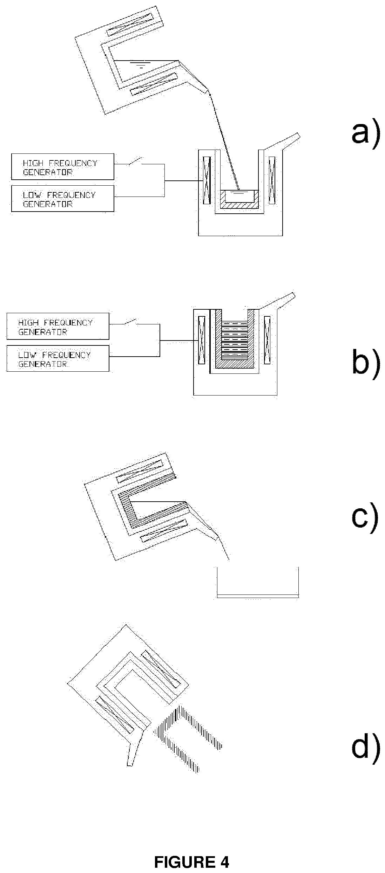

**Figure 4:** Schematic representation of the method of the invention, depicting the steps of (a) pouring liquid silicon into the crystallisation mould of the invention, (b) solidifying the liquid silicon by unidirectional solidification from the walls of the mould while stirring the liquid silicon by means of electromagnetic stirring (EMS) with a low frequency generator, (c) stopping the unidirectional solidification when a percentage of the liquid silicon has solidified and decanting the excess liquid silicon; and (d) removing the solid silicon metal ingot from the crystallisation mould.

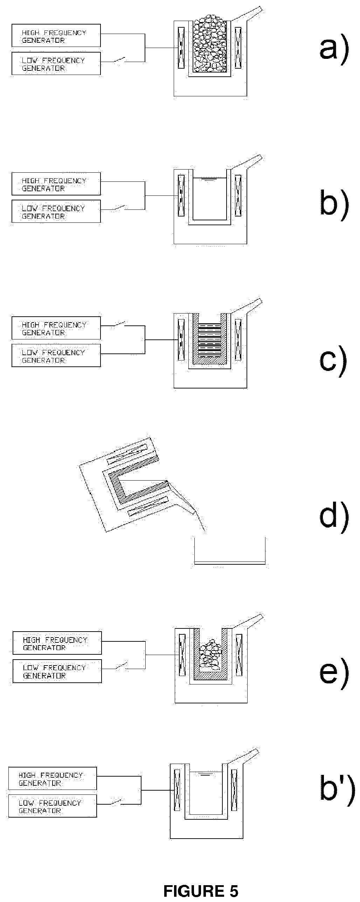

**Figure** 5: Schematic representation of the method of the invention, depicting the steps of (a) providing solid silicon in the melting furnace/ crystallisation mould of the invention, (b) melting the solid silicon by means of a high frequency generator, (c) solidifying the liquid silicon by unidirectional solidification from the walls of the mould while stirring the liquid silicon by means of electromagnetic stirring (EMS) with a low frequency generator, (d) stopping the unidirectional solidification when a percentage of the liquid silicon has solidified and decanting the excess liquid silicon; (e) providing additional solid silicon in the melting furnace/ crystallisation mould of the invention; and (b') melting the additional solid silicon together with the purified solid silicon metal ingot by means of a high frequency generator.

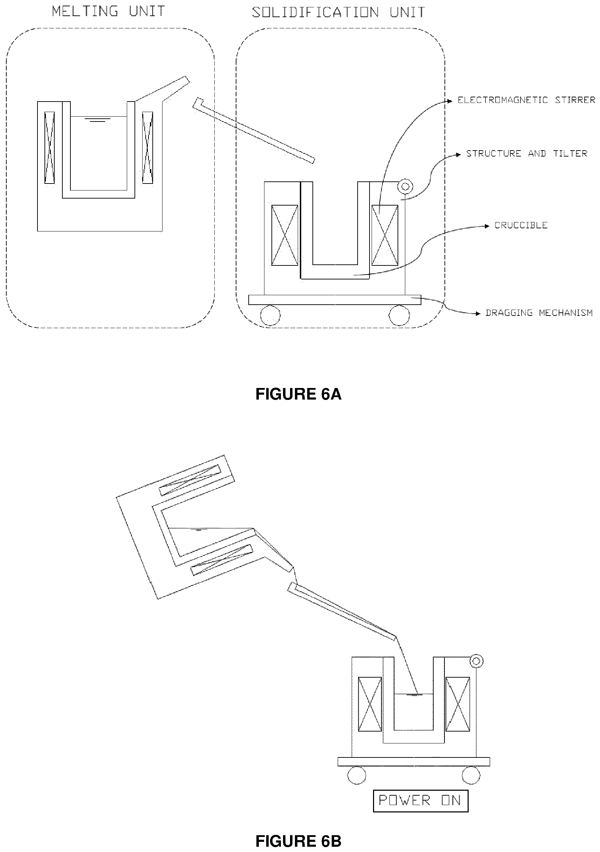

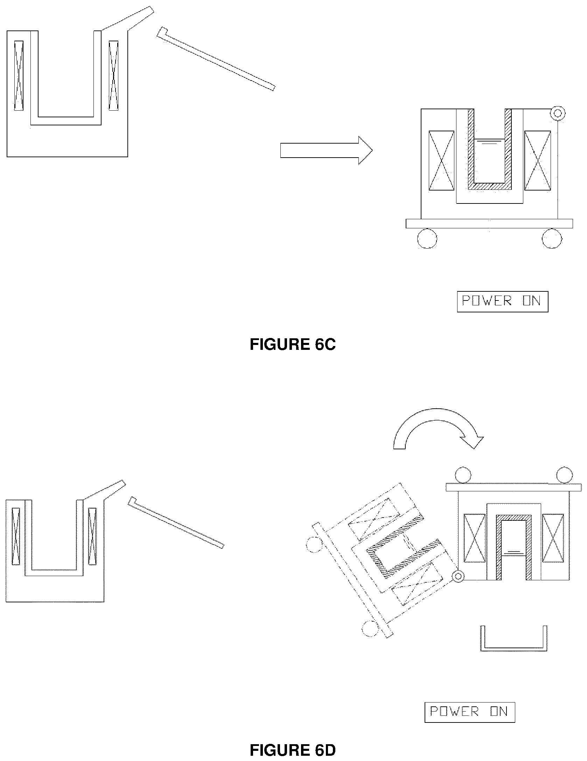

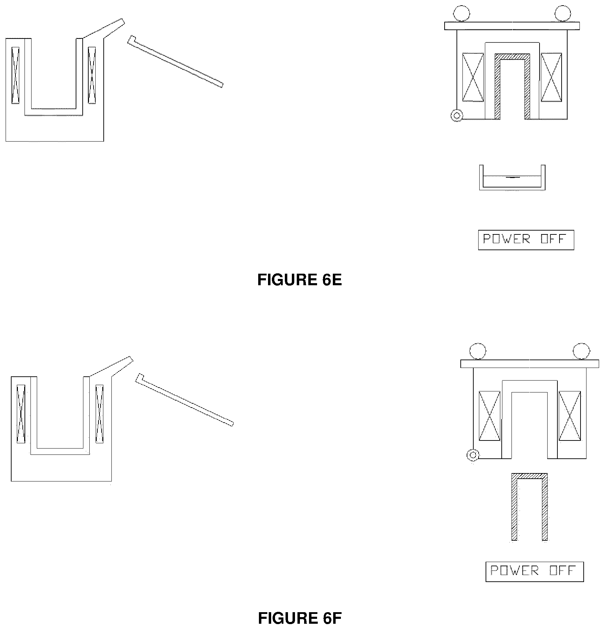

**Figure 6:** Schematic representations of the device of the invention. (A) Figure shows the melting unit and the solidification unit, wherein the solidification unit depicts the electromagnetic stirrer, supporting structure and tilting unit, dragging mechanism and crucible. (B) The step of pouring liquid silicon into the crystallisation mould is shown. (C) The step of solidifying the liquid silicon by unidirectional solidification from the walls of the mould while stirring the liquid silicon by means of electromagnetic stirring (EMS) is shown. (D) The step of tilting the crystallisation mould while the electromagnetic stirrer is still in operation (Power ON) is shown. (E) The step of decanting the excess liquid silicon by switching the electromagnetic stirrer off (Power OFF) is shown. (F) The step of removing the solid silicon metal ingot from the crystallisation mould is shown.

## DETAILED DESCRIPTION OF THE INVENTION

As explained above, the inventors have developed a process for obtaining purified silicon metal and/or for purifying silicon metal, wherein silicon of lower purity grade is used as a starting raw material. This silicon of lower purity grade is melted to liquid silicon and then the liquid silicon is solidified in a crucible-lined crystallisation mould under non-contact stirring of the liquid silicon by means of electromagnetic stirring (EMS), up to a point where a specified percentage of the liquid silicon solidifies upon the walls of the crucible-lined crystallisation mould. As a result, the excess non-solidified liquid silicon that remains in the centre of the mould is enriched in the impurities initially present in the silicon raw material, whereas a hollow ingot of solid silicon of a higher purity grade is obtained.

Method for obtaining purified silicon metal

In a first aspect, the invention relates to a method for obtaining purified silicon metal, the method comprising:

a) providing liquid silicon in a crystallisation mould having crucible-lined walls,
b) solidifying the liquid silicon by unidirectional solidification from the crucible-lined walls while stirring the liquid silicon by means of electromagnetic stirring (EMS), until a percentage of the liquid silicon solidifies; and
c) decanting the excess non-solidified liquid silicon.

As a result of this method, the excess non-solidified liquid silicon is enriched in the impurities of the initial liquid silicon, and at the same time the solid silicon metal ingot shows a higher purity grade compared to the initial liquid silicon.
As may be evident to the person skilled in the art, the method of the invention for obtaining purified silicon metal is equally suitable for purifying solid silicon. That is, the method is suitable for increasing the purity grade of the solid silicon used as raw material (i.e. changing from a lesser purity grade to a higher purity grade). Thus, the method of the invention may have the particular use of recycling off-spec silicon or scrap material from other applications that would otherwise be discarded as waste. For example, the method of the invention may be used in the recovery of solar grade silicon from kerf loss slurry waste. In an alternative example, lower-grade metallurgical solid silicon may be used as the starting raw material. Some of the purity grades currently available for a wide range of applications are listed below, going in order from lower to higher purity grade:

* Metallurgical grade silicon: %Fe<0.5; %Ca<0.3; %Al<0.5;
* Chemical grade silicon: %Fe<0.4; %Ca<0.1; Min<%Al<Max;
* Polysilicon grade silicon: %Fe<0.3; %Ca<0.03; Min<%Al<Max; ppmwP<limit; ppmwB<limit; Trace elements< limit.
* Solar grade silicon: %Fe<0.0001; %Ca<0.0001; %Al<0.0001; ppmwP<1; ppmwB<1; ppmw others< 10.

Silicon purity grades are also often defined in agreement with an "N-value" notation, wherein:

* Metallurgical grade silicon (MG-Si) is 98 per cent pure;
* Solar grade silicon (SG-Si) is 99.9999, or 6N ("six nines") pure (i.e., 1 part impurity per million); and
* Electronic grade silicon (EG-Si) is 99.9999999, or 9N ("nine nines) pure (i.e., less than 1 part impurity per 10 million).

In particular embodiments, the solid silicon is provided in the form of chunks, powder, pellets and/or bricks.
In particular embodiments, the method of the invention may comprise additional steps prior to step (a) or subsequent to step (c) but it does not comprise any additional intervening steps between step (a) and step (c). That is to say, in a particular embodiment, the method consists of the steps described above. In another particular embodiment, the method of the invention further comprises a step (d) of removing the solid silicon metal ingot from the crystallisation mould.

The step of providing liquid silicon in a crystallisation mould may be achieved by melting solid silicon directly in the crystallisation mould. Thus, in a particular embodiment, the method comprises a prior step of melting silicon from solid silicon directly in the crystallisation mould. In the alternative, the step of providing liquid silicon in a crystallisation mould may be achieved by melting solid silicon elsewhere before step (a) and transferring the liquid silicon to the crystallisation mould after melting. Thus, in a particular embodiment, the method comprises the prior steps of obtaining liquid silicon from an electrometallurgical reduction furnace where quartz is reduced, or from a melting furnace wherein silicon is melted from solid silicon, and transferring the liquid silicon melt into the crystallisation mould. Methods of transferring the liquid silicon melt are known to the person skilled in the art. In particular embodiments, the liquid silicon melt is transferred into the crystallisation mould by pouring the melt into the crystallisation mould, or by means of a transfer ladle.

The crystallisation mould comprises crucible-lined walls (i.e., a crucible). As a person skilled in the art would readily understand, a crucible is a container in which metals or other substances may be melted or subjected to very high temperatures. That is, a crucible is made of materials capable of withstanding very high temperatures. In the context of the instant invention it must be taken into account that the melting point of silicon is 1414°C. Thus, it is desirable that the crucible-lined walls of the mould are capable of withstanding temperatures higher than 1000°C, higher than 1100°C, higher than 1200°C, higher than 1300°C, higher than 1400°C, higher than 1500°C, higher than 1600, higher than 1700°C, or higher than 1800°C. Crucibles are typically ceramic or metal. In particular embodiments, the crucible is made of a material selected from the group consisting of High Alumina Cement (HAC), Mullite, Silicon carbide (SiC), Graphite, Quartz, refractory SiC composites, refractory metals, preferably iron-alloys, and combinations thereof. In particular embodiments of the invention, the mould can be made entirely of a refractory, crucible material, capable of withstanding very high temperatures. In alternative embodiments, the mould is not necessarily made of a refractory material, but is lined with a crucible material in the space configured to receive the liquid silicon, such that the crucible-lined mould is capable of withstanding very high temperatures. In the context of the instant invention, the mould may have any shape or form. For example, the mould may be of a rectangular, cylindrical, conical, pyramidal, or inverted-bell shape, or any other shape known to a person skilled in the art. In a particular embodiment, the crucible-lined walls comprise a bottom wall and side walls. In another particular embodiment, the crucible-lined walls are of conical or pyramidal shape.

Under certain circumstances it is advisable to prevent the uncontrolled formation of a skin of silicon on the crucible-lined walls when liquid silicon is poured into the crystallisation mould or when solid silicon is being melted directly in the crystallisation mould. Thus, in an embodiment, the crucible-lined walls are heated prior to starting the method of the invention, i.e., before step (a), in order to minimise the risk of formation of a skin of silicon on said crucible-lined walls. This minimises the formation of an initial skin of silicon with the same concentration of impurities that are present in the mother liquid silicon melt.

The present invention provides a process for purifying silicon metal that satisfies the above-mentioned needs. This process is able to remove impurities with a segregation coefficient lower than 1. Some of these impurities are: Al, As, Ba, Bi, Ca, Cd, Fe, Co, Cr, Cu, Fe, K, La, Mg, Mn, Mo, Na, Ni, P, Pb, Sb, Se, Sn, Sr, Ti, V, Zn, Zr, C and B. Table 1 shows the segregation coefficients of the main impurities in silicon. If the segregation coefficient is higher than 1 (for example, oxygen with a segregation coefficient of 1.25), the present invention will not reduce its concentration by the effect of segregation, although it is a good system for removing slag inclusion (which are rich in oxygen).

**Table 1.- Segregation coefficient of selected impurities in silicon**

| Segregation Coefficient of Selected Impurities in Silicon | | |
|---|---|---|
| Dopants | Al | $3.0 \times 10^{-2}$ |
| | B | 0.8 |
| | P | 0.35 |

(continued)

| Segregation Coefficient of Selected Impurities in Silicon | | |
|---|---|---|
| Transition metals (FZ) | Ag | $5.0 \times 10^{-7}$ |
| | Co | $1.0 \times 10^{-7}$ |
| | Cr | $2.5 \times 10^{-6}$ |
| | Cu | $3.0 \times 10^{-7}$ |
| | Fe | $5.0 \times 10^{-6}$ |
| | Mn | $5.0 \times 10^{-6}$ |
| | Mo | $1.5 \times 10^{-7}$ |
| | Ni | $1.5 \times 10^{-7}$ |
| | Ta | $1.8 \times 10^{-8}$ |
| | Ti | $1.8 \times 10^{-6}$ |
| | V | $1.9 \times 10^{-6}$ |
| | W | $1.0 \times 10^{-8}$ |
| | Zr | $1.8 \times 10^{-8}$ |
| Other | C | 0.05 |
| | Mg | $3.2 \times 10^{-6}$ |
| Adapted from After G. L. Coletti, D. MacDonald, and D. Yang, 2012. Role of impurities in solar silicon, in Advanced Silicon Materials for Photovoltaic Applications, S. Pizzini (Ed.), Wiley, pp. 79-125. | | |

Unidirectional solidification is a well-known process typically used in the purification of metallic silicon, wherein solid low grade silicon is melt and solidified under specific conditions. When recycling waste or using metallurgical silicon, it is important to take into account that the amount of impurities present in the liquid metal favours supercooling during solidification, which may lead to dendritic solidification. Dendritic solidification is an inefficient type of unidirectional solidification since it causes the entrapment of a certain amount of impurity enriched liquid. In order to prevent or minimise the risks associated with dendritic solidification, segregation of impurities to the liquid fraction should be enhanced. Hence, the velocity of agitation/ stirring of the liquid in the solid-liquid interphase needs to be carefully monitored in order to control the thickness of the boundary layer (d) and to improve the results of the segregation of impurities to the liquid fraction. In particular, if the velocity of agitation/ stirring of the liquid in the interphase is increased, the thickness of the boundary layer (d) will decrease and in consequence the results of the segregation of impurities to the liquid fraction will improve. Typical values for the thickness of the boundary layer under different conditions are: $10^{-3}$ cm (vigorous stirring) < d < $10^{-1}$ cm (natural convection). When the solidification speed is very low or when the mixing efficiency is increased, the effective segregation coefficient ($k_e$) tends to be closer to the segregation coefficient under perfect stirring ($k_o$). However, if the solidification speed increases or if there is no effective mixing, the diffusion component in the boundary layer becomes more important and the effective segregation coefficient ($k_e$) tends to be closer to 1 (i.e., a $C_S/C_O = 0$). Thus, the value of the effective segregation coefficient ($k_e$) is $k_o \leq k_e \leq 1$ as shown in figure 1. Additionally, figure 2 shows three different types of solute redistribution patterns that can occur when diffusion in the solid is negligible during solidification. In type 1 either liquid diffusion or convection-induced mixing in the liquid is complete. Accordingly, this pattern achieves the most efficient segregation. In type 3 on the other hand, liquid diffusion is limited and there is no convection-induced mixing in the liquid. As a consequence, the resultant solute segregation is minimal. Type 2 is intermediate, so a certain degree of solute segregation can be obtained, however not as efficiently as in type 1. These three situations can be summarized and characterized according to the parameters described in the table 2 below:

**Table 2.- Solute redistribution patterns**

| Perfect convection | Convective layer = diffusive layer | No convection |
|---|---|---|
| $\Delta < 0.1$ | $0.1 < \Delta < 10$ | $10 < \Delta$ |

(continued)

| Perfect convection | Convective layer = diffusive layer | No convection |
|---|---|---|
| Scheil law with $k$ | Scheil law with $k_{eff}$ (BPS) $$\frac{C_{S(\infty)}}{C_O} = \frac{k}{k + (1-k)e^{-\Delta}}$$ | Tiller or Smith law with k |
| $\Delta$ (boundary layer); k (segregation coefficient); BPS (BPS theory: Burton, Prim, and Slichter); CS (Final concentration of the solute in the solid); CO (Original concentration of the solute in the melt). | | |

Hence, the speed of agitation/ stirring of the liquid is paramount in order to improve the repartition of impurities between the solid fraction and the liquid fraction. It is advisable to achieve a speed of the liquid in the solid-liquid interphase of 1 m/s, but more preferable to be in the range of 3 m/s.

The rate of unidirectional solidification is controlled. In particular, the rate of unidirectional solidification depends on several factors such as the initial temperature of the mould, initial temperature of the liquid and power and frequency of the electromagnetic generator. These factors will influence the rate of unidirectional solidification (i.e., solidification speed). Preferably, the rate of unidirectional solidification is between $10^{-7}$ to $10^{-4}$ m/s. In a particular embodiment, the solidification speed is $10^{-6}$ to $10^{-4}$ m/s. The rate of unidirectional solidification (or solidification speed) may be tightly controlled by providing means to adjust the temperature of the crucible-lined walls in the crystallisation mould as required. That is, the crucible-lined walls are maintained at a temperature sufficient to cause silicon crystalline growth. Thus, in an embodiment, the crystallisation mould comprises an insulation of said crucible-lined walls and/or temperature controlling means for said crucible-lined walls. In an embodiment, the insulation of the crucible-lined walls is achieved by the provision of an appropriate refractory lining. In an embodiment, the temperature controlling means comprise a heating element capable of heating the crucible-lined walls.

Another factor that is adjusted in the context of the present invention is the speed of stirring the liquid silicon melt by means of electromagnetic stirring (EMS). In the context of the invention, the term "electromagnetic stirring" or "EMS" refers to the process by which a high level stirring efficiency can be achieved through interaction between the magnetic field from an electromagnetic stirrer and an electrically conducting metal bath, thus obviating the need of physical contact between a stirrer and the liquid metal bath. One type of electromagnetic technique is electromagnetic stirring wherein fluid flow is generated by Lorenz force provided by a linear induction motor. The electromagnetic stirring may be provided by any suitable electromagnetic stirrer (i.e., any electromagnetic stirrer capable of inducing an azimuthal electromagnetic field in the liquid silicon), such as a static induction coil. In particular embodiments, electromagnetic stirring (EMS) is performed at a frequency of 1 to 200 Hz, 2 to 150 Hz, 3 to 100 Hz, 4 to 90 Hz, 5 to 80 Hz, 6 to 70 Hz, 7 to 60 Hz, 8 to 50 Hz, 9 to 40 Hz, 10 to 30 Hz, 11 to 29 Hz, 12 to 28 Hz, 13 to 27 Hz, 14 to 26 Hz or 15 to 25 Hz. In particular embodiments, electromagnetic stirring (EMS) is performed at a frequency of 1 to 200 Hz, 1 to 100 Hz, 1 to 50 Hz, 1 to 40 Hz, 1 to 30 Hz, 1 to 20 Hz, or 2 to 15 Hz. In an embodiment, electromagnetic stirring (EMS) is performed at a frequency of 1 to 100 Hz, preferably 1 to 30 Hz, more preferably 1 to 20 Hz, most preferably 2 to 15 Hz. In particular embodiments, electromagnetic stirring (EMS) is performed at a frequency of 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30 Hz.

The method of the invention can be carried out under an inert atmosphere or under an oxidizing atmosphere, if required. Thus the method can be carried out under an atmosphere selected from the group consisting of argon, nitrogen, air, air enriched with oxygen, a mixture of nitrogen and oxygen, and pure oxygen. In particular embodiments, the method can be carried out by injecting a suitable gas through a lance for the purpose of regulating the temperature of the liquid silicon melt (i.e., for cooling) or for protecting from oxidation, if and as required.

In the method of the invention, the step of decanting the remaining excess non-solidified liquid silicon is performed under controlled stirring conditions. At the start of the step of decantation, the excess liquid silicon is still subjected to electromagnetic stirring. This allows for the excess liquid silicon to remain inside the crystallisation mould even if the crystallisation mould is turned upside down, provided that the power is maintained on for the electromagnetic stirrer. This prevents any undesired spills of excess liquid silicon during the operation of turning the crystallisation mould upside down. In the context of the invention, the upside down position of the crystallisation mould corresponds to a position where the crystallisation mould is turned 90 to 270 degrees, 135 to 225 degrees, 150 to 210 degrees, 160 to 200 degrees, or 170 to 190 degrees. Preferably, the upside down position corresponds to a position where the crystallisation mould is turned 180 degrees. In the upside down position, the liquid metal remains mostly within the vessel due to the effect of the electromagnetic field. When the power is turned off for the electromagnetic stirrer, the liquid silicon falls suddenly into an auxiliary mould, thus emptying the inside of the crystallisation mould. Unidirectional solidification is maintained until a percentage of the liquid silicon solidifies. That is, unidirectional solidification is maintained until a percentage of the liquid silicon solidifies such that solid silicon of a higher purity grade is obtained. The specific degree of solidification (i.e., percentage of solidification) of the liquid silicon is determined by the desired degree of purity in the solid silicon ingot, since presence of an impurity in the solid ingot increases as the percentage of solidification increases. In particular, the concentration of an impurity in the initial raw silicon material (Ci) is higher than the concentration of said impurity in the solid silicon ingot (Cf), expressed as the ratio Ci/Cf as a function of the ingot's yield (i.e., percentage of solidification), except for an ingot's yield value of 100 (that is, when a 100% of the liquid silicon raw material has solidified). For an ingot's yield value of 100, the ratio Ci/Cf is 1. Thus, the specific degree of solidification (i.e., percentage of solidification) of the liquid silicon can be selected depending of the reduction desired for the concentration of the specific impurity in the final solid ingot. Unidirectional solidification is preferably stopped when 10 to 90% of the liquid silicon has solidified. Said in other words, unidirectional solidification is preferably stopped when 10 to 90% of the excess non-solidified liquid silicon remains. Thus, in particular embodiments, the percentage of the liquid silicon that has solidified is at least 10%, at least 20%, at least 30%, at least 40%, at least 50%, at least 60%, at least 70%, at least 80%, or at least 90%. In particular embodiments, the percentage of the liquid silicon that has solidified is 20 to 90%, preferably 40 to 85%, more preferably 50 to 80%, most preferably 60 to 80%. Stopping the unidirectional solidification means in the context of the present invention not allowing the liquid silicon melt to completely solidify and proceeding to the next step. As the skilled person realises, when a desired percentage of the liquid silicon has solidified, the crystallisation mould contains (a) a solid hollow ingot comprising higher purity solid silicon, and (b) an interior liquid core comprising an impurity enriched, excess liquid silicon.

Thus, unidirectional solidification is maintained until a percentage of the liquid silicon solidifies, wherein the percentage of the liquid silicon that solidifies corresponds with a desired purity grade. The method of the invention comprises solidifying the liquid silicon by unidirectional solidification from the crucible-lined walls while stirring the liquid silicon by means of electromagnetic stirring (EMS), until a percentage of the liquid silicon solidifies, that is, until a desired purity grade is achieved. "Purity grade", as used herein in the context of the method of the invention, refers to a purity value used as a reference for analytical data obtained from laboratory examinations of solid silicon samples. The purity grade can be an absolute value; a relative value; a value that has an upper and/or lower limit; a range of values; an average value; a median value, a mean value, or a value as compared to a particular control or baseline value. A purity grade value can be relative and based on an individual sample value, such as for example, a value obtained from a sample of solid silicon to be purified, but at an earlier time point (i.e., before purifying the solid silicon). In this case, the purity grade of the solid silicon to be purified (i.e., the raw material) can be taken to be the reference value. Once this reference value is established, the purity grade achieved during purification by means of the method of the invention can be compared with this reference value, and thus be assigned a level of "increased" or "decreased" value. For example, an increase in purity grade above the reference value of at least 1.1-fold, 1.5-fold, 5-fold, 10-fold, 20-fold, 30-fold, 40- fold, 50-fold, 60-fold, 70-fold, 80-fold, 90-fold, 100-fold, 500-fold, 1000-fold or even more compared with the reference value is considered as an "increased" purity grade value. Similarly, the skilled person can infer that the purity grade is necessarily related to the concentration of impurities in the solid silicon to be purified (i.e., the raw material) and to the concentration of impurities in the purified solid silicon, such that the concentration of impurities is decreased in the purified solid silicon. A concentration value of a particular impurity/ contaminant in the purified solid silicon of at least 0.9-fold, 0.75-fold, 0.2-fold, 0.1 -fold, 0.05-fold, 0.025-fold, 0.02-fold, 0.01 -fold, 0.005-fold, 0.001-fold or even less compared to the concentration of the same impurity/ contaminant in the solid silicon to be purified (i.e., the raw material) is considered as a "decreased" concentration of the impurity/ contaminant.

In a further embodiment, the method further comprises the step of melting the purified solid silicon metal ingot and repeating steps (a) to (e) of the method of the invention, such that a purified solid silicon metal ingot of a higher purity grade may be obtained. The ingot may be re-melt by itself, that is, without the addition of any further materials, or alternatively it may be re-melt together with an additional load of solid silicon raw materials. Suitable solid silicon raw materials have been described elsewhere herein. In this way, a solid silicon ingot of higher purity grade may be obtained.

In a further embodiment, the solid hollow ingot could be cleaned by mechanical means in order to remove a thin layer (1-10 mm) which contains an excess of impurities due to rapid solidification when liquid silicon contacts the crucible internal walls and also due to contact with the crucible itself, which can contaminate the ingot by impurity diffusion or trapping of small parts detached from the crucible. This cleaning process can be done by appropriate methods such as cutting or milling using different means (sand blasting, high pressure water jets, dry ice blasting or a diamond tool) and it can be automated using a robot.

All the terms and embodiments described elsewhere herein are equally applicable to these aspects of the invention.

Crystallisation mould and use thereof

In an aspect, the invention also relates to a device, the device comprising:

a) a crystallisation mould;
b) an electromagnetic stirrer; and
c) a decanting mechanism.

The crystallisation mould comprises crucible-lined walls. As a person skilled in the art would readily understand, a crucible is a container in which metals or other substances may be melted or subjected to very high temperatures. That is, a crucible is made of materials capable of withstanding very high temperatures. In the context of the instant invention it must be taken into account that the melting point of silicon is 1414°C. Thus, it is desirable that the crucible-lined walls of the mould are capable of withstanding temperatures higher than 1000°C, higher than 1100°C, higher than 1200°C, higher than 1300°C, higher than 1400°C, higher than 1500°C, higher than 1600, higher than 1700°C, or higher than 1800°C. Crucibles are typically ceramic or metal. In the context of the instant invention, the mould may have any shape or form. For example, the mould may be of a rectangular, cylindrical, conical, pyramidal, or inverted-bell shape, or any other shape known to a person skilled in the art. In a particular embodiment, the crucible-lined walls comprise a bottom wall and side walls. In another particular embodiment, the crucible-lined walls are of conical or pyramidal shape. In particular embodiments, the crucible is made of a material selected from the group consisting of High Alumina Cement (HAC), Mullite, Silicon carbide (SiC), Graphite, Quartz, refractory SiC composites, refractory metals, preferably iron-alloys, and combinations thereof. Optionally, the device of the invention further comprises an insulation of said crucible-lined walls and/or temperature controlling means for said crucible-lined walls.

In a particular embodiment, the crystallisation mould of the invention can be used as a melting furnace to directly melt solid silicon prior to unidirectional solidification, in which case the mould is equipped with any appropriate type of heating means. Heating means are well known in the art in connection with melting furnaces, for example inductive, resistive and gas furnaces. In a preferred embodiment, heating is provided by induction means.

In an embodiment, the crystallisation mould of the invention is configured to be fully or partially open, or partially closed with a small hole as a liquid inlet and gas outlet. In particular embodiments, the crystallisation mould of the invention is configured to have a top that is 5 to 95%, 5 to 75%, 5 to 50%, 5 to 25%, or 5 to 10% open. In particular embodiments, the crystallisation mould of the invention is configured to have a top that is 95%, 90%, 85%, 80%, 75%, 70%, 65%, 60%, 55%, 50%, 45%, 40%, 35%, 30%, 25%, 20%, 15%, 10% or 5% open. In a particular embodiment, the crystallisation mould of the invention is configured to have a top that is 6.25% open. In a particular operation of the crystallisation mould of the invention, an open or partially open top may be used to ensure that the top surface remains liquid while solidification of the liquid silicon progresses by unidirectional solidification from the crucible-lined walls of the crystallisation mould while stirring the liquid silicon by means of electromagnetic stirring (EMS). In an alternative embodiment, the crystallisation mould of the invention is configured to have a temperature controlled lid, capable of performing the same functionality to ensure that the surface in contact with the temperature controlled lid remains liquid while solidification of the liquid silicon progresses by unidirectional solidification from the crucible-lined walls of the crystallisation mould while stirring the liquid silicon by means of electromagnetic stirring (EMS).

The device of the invention is equipped with an electromagnetic stirrer. Said electromagnetic stirred can be positioned in any location with respect to the crystallisation mould of the invention. In a particular embodiment, the electromagnetic stirrer is attached to or embedded into the walls of the crystallisation mould. In another embodiment, the electromagnetic stirrer is attached underneath the crystallisation mould.

The device of the invention comprises a decanting mechanism. The purpose of the decanting mechanism is to assist with emptying the remaining liquid from the mould. In a particular embodiment, the decanting mechanism is a tilting mechanism. In a preferred embodiment, the tilting mechanism is configured such that the crystallisation mould may be tilted between 90 to 180 degrees.

In a particular embodiment, the mould further comprises a dragging mechanism. The dragging mechanism is particularly useful when the melting furnace is a separate unit, independent from the crystallisation mould. In operation, the melting furnace needs to be tilted for the liquid silicon to be poured into the crystallisation mould. After pouring, the crystallisation mould of the invention is moved away from the melting furnace by means of the dragging mechanism to facilitate operation.

In a related aspect, the invention also refers to the use of a crystallisation mould according to the invention in a method for obtaining purified silicon metal. That is to say, the invention relates to a method for obtaining purified silicon metal by means of the crystallisation mould according to the present invention. As may be evident to the person skilled in the art, the use of a crystallisation mould according to the invention for obtaining purified silicon metal is equally suitable for purifying solid silicon from a lesser purity grade to a higher purity grade.

In the use of the invention, the crystallisation mould is loaded with liquid silicon when a melting furnace independent from the crystallisation mould of the invention is used. In the alternative, solid silicon may be melted directly in the crystallisation mould. The crucible-lined walls of the crystallisation mould is typically heated to a temperature higher than 100 °C to prevent the uncontrolled formation of a skin of silicon on the crucible-lined walls when liquid silicon melt is poured into the crystallisation mould or when solid silicon is being melted directly in the crystallisation mould. However, the temperature of the crucible-lined walls of the crystallisation mould should be sufficient to cause silicon crystalline growth. While solidification is then let to occur, an electromagnetic stirrer creates an alternating current (AC) that induces a rotating electromagnetic force in the liquid silicon. Solidification occurs centripetally in the radial direction, so that a purified silicon ingot grows inwards from the crucible walls and the impurities are concentrated in the liquid phase. In the context of the use of the crystallisation mould of the invention, unidirectional solidification is preferably stopped when 40 to 85% of the liquid silicon has solidified. Thus, in a particular embodiment, the percentage of the liquid silicon that has solidified is 40 to 85%, preferably 50 to 80%, more preferably 60 to 80%. Stopping the unidirectional solidification means in the context of the present invention not allowing the liquid silicon melt to completely solidify and proceeding to the next step. Once the set time corresponding to a specific degree of solidification of the liquid silicon is reached, the rotator is turned upside down while maintaining the power on for the electromagnetic stirrer. In a particular embodiment, the upside down position corresponds to a position where the crystallisation mould is turned 90 to 270 degrees, 135 to 225 degrees, 150 to 210 degrees, 160 to 200 degrees, or 170 to 190 degrees. Preferably, the upside down position corresponds to a position where the crystallisation mould is turned 180 degrees. In the upside down position, the liquid metal remains mostly within the vessel due to the effect of the electromagnetic field. When the power is turned off for the electromagnetic stirrer, the liquid silicon falls suddenly into an auxiliary mould, thus emptying the inside of the crystallisation mould. In a final step, the purified hollow ingot is removed. In a particular embodiment, the purified hollow ingot is removed with the aid of a mechanical pusher from the bottom of the crucible.

All the terms and embodiments previously described are equally applicable to these aspects of the invention.

It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

**EXAMPLES**

The following invention is hereby described by way of the following examples, which are to be construed as merely illustrative and not limitative of the scope of the invention.

Example 1

1000 kg of commercial silicon with a Fe content of 0.23%w were casted directly from the tapping hole of a metallurgical furnace into a transfer ladle. The temperature after casting was 1545 °C, conventional gas refining with oxygen injection (from 3 to 9 $Nm^3O_2/h$, normal cubic meter of oxygen per hour) was carried out during casting and transfer into a solidification furnace. Afterwards the ladle was tilted into the solidification furnace, which was set at a frequency of 25 Hz for 40 minutes and achieving a yield of 80 % solid. Then the excess liquid was taped into an auxiliary mould following the steps showed in figure 4. The resulting hollow ingot had an iron content of 288.5 ppm by weight.

**Table 3.- Inductively coupled plasma atomic emission spectroscopy (ICP OES) analysis of example 1**

|  | Al | Ca | Cr | Cu | Fe | P | Ti |
|---|---|---|---|---|---|---|---|
| Raw material | 369,0 | 359,0 | 7,9 | 11,4 | 2329,0 | 19,2 | 192,0 |
| Excess liquid | 1034 | 949 | 22 | 29 | 6553 | 39 | 537 |
| Solid ingot | 47,2 | 73,4 | 0,9 | 2,9 | 288,5 | 9,8 | 25,0 |
| Units are ppm by weight. | | | | | | | |

Example 2

1000 kg of low Fe silicon with a Fe content of 1115,6 parts per million (ppm) by weight was heated by induction means at 756 Hz up to 1600 °C, afterwards the melt was rotated using a low frequency electromagnetic stirrer at a frequency of 15 Hz for 40 minutes and achieving a yield of 80 % solid. Then the liquid was taped into an auxiliary mould following the steps showed in figure 3. The resulting hollow ingot had an iron content of 120,6 ppm by weight.

**Table 4.- Inductively coupled plasma atomic emission spectroscopy (ICP OES) analysis of example 2**

|  | Al | Ca | Cr | Cu | Fe | P | Ti |
|---|---|---|---|---|---|---|---|
| Raw material | 51,1 | 140,5 | 23,4 | 3,9 | 1115,6 | 29,8 | 14,7 |

(continued)

|  | Al | Ca | Cr | Cu | Fe | P | Ti |
|---|---|---|---|---|---|---|---|
| Excess liquid | 210,5 | 359,7 | 63,3 | 6,1 | 2839,1 | 58,5 | 28,9 |
| Solid | 6,0 | 27,9 | 2,6 | 0,6 | 120,6 | 14,7 | 1,3 |
| ingot |  |  |  |  |  |  |  |
| Units are ppm by weight. | | | | | | | |

Example 3

1000 kg of commercial 3N silicon with a Fe content of 309,6 parts per million (ppm) by weight was heated by induction means at 756 Hz up to 1600 °C. Afterwards the melt was rotated using a low frequency electromagnetic stirrer at a frequency of 20 Hz for 40 minutes and achieving a yield of 80 % solid. Then the excess liquid was taped into an auxiliary mould following the steps stated in figure 3. The resulting hollow ingot had an iron content of 9,2 ppm by weight.

**Table 5.- Inductively coupled plasma atomic emission spectroscopy (ICP OES) analysis of example 3**

|  | Al | Ca | Cr | Cu | Fe | P | Ti |
|---|---|---|---|---|---|---|---|
| Raw material | 38,7 | 16,2 | 4,4 | 2,3 | 309,6 | 25,1 | 1,2 |
| Excess liquid | 216,5 | 79,8 | 22,1 | 11,4 | 1647,6 | 124,9 | 5,9 |
| Solid ingot | 0,1 | 0,1 | 0,1 | 0,1 | 9,2 | 10,6 | 0,3 |
| Units are ppm by weight. | | | | | | | |

Example 4

1000 kg of photovoltaic silicon kerf loss waste with a Fe content of 14629,2 parts per million (ppm) by weight was heated by induction means at 756 Hz up to 1600 °C. Afterwards the melt was rotated using a low frequency electromagnetic stirrer at a frequency of 20 Hz for 40 minutes and achieving a yield of 80 % solid. Then the liquid was taped into an auxiliary mould following the steps stated in figure 3. The resulting hollow ingot had an iron content of 1375 ppm by weight.

**Table 6.- Inductively coupled plasma atomic emission spectroscopy (ICP OES) analysis of example 4**

|  | Al | Ca | Cr | Cu | Fe | P | Ti |
|---|---|---|---|---|---|---|---|
| Raw material | 887,0 | 79,1 | 20,3 | 11,2 | 14629,2 | 74,9 | 26,0 |
| Excess liquid | 4356,2 | 451,7 | 61,5 | 34,5 | 67542,2 | 161,3 | 70,8 |
| Solid ingot | 17,2 | 9,6 | 10,5 | 5,4 | 1375,0 | 53,8 | 14,8 |
| Units are ppm by weight. | | | | | | | |

Example 5

1000 kg of photovoltaic silicon kerf loss waste with a Fe content of 169,2 parts per million (ppm) by weight was heated by induction means at 756 Hz up to 1600 °C. Afterwards the melt was rotated using a low frequency electromagnetic stirrer at a frequency of 20 Hz for 30 minutes and achieving a yield of 60 % solid. Then the excess liquid was taped into an auxiliary mould following the steps stated in figure 3. The resulting hollow ingot had an iron content of 23,8 ppm by weight.

**Table 7.- Inductively coupled plasma atomic emission spectroscopy (ICP OES) analysis of example 5**

|  | Al | Ca | Cr | Cu | Fe | P | Ti |
|---|---|---|---|---|---|---|---|
| Raw material | 2414,0 | 441,3 | 2,1 | 3,4 | 169,2 | 5,9 | 4,2 |
| Excess liquid | 9883,7 | 2089,3 | 8,4 | 14,6 | 762,3 | 15,6 | 18,6 |

(continued)

|  | Al | Ca | Cr | Cu | Fe | P | Ti |
|---|---|---|---|---|---|---|---|
| Solid ingot | 46,7 | 4,3 | 0,6 | 0,5 | 23,8 | 3,2 | 0,5 |
| Units are ppm by weight. | | | | | | | |

Example 6

1000 kg of photovoltaic silicon kerf loss waste with a Fe content of 15034,4 parts per million (ppm) by weight was heated by induction means at 756 Hz up to 1600 °C, afterwards the melt was rotated using a low frequency electromagnetic stirrer at a frequency of 30 Hz for 40 minutes and achieving a yield of 80 % solid. Once the liquid was taped into an auxiliary mould, a recharge of 200 kg 99% silicon chunks was added, re-melted and purified following the previous steps as stated in figure 5. The resulting hollow ingot had an iron content of 148,7 ppm by weight.

**Table 8.- Inductively coupled plasma atomic emission spectroscopy (ICP OES) analysis of example 6**

|  | Al | Ca | Cr | Cu | Fe | P | Ti |
|---|---|---|---|---|---|---|---|
| Raw material #1 | 931,6 | 63,4 | 19,8 | 16,6 | 15034,4 | 62,7 | 14,2 |
| Excess liquid #1 | 4426,3 | 444,3 | 63,7 | 41,3 | 64238,7 | 197,3 | 71,8 |
| Recharge feedstock | 57,2 | 29,6 | 34,5 | 21,4 | 4373,2 | 153,8 | 44,8 |
| Raw | 42,6 | 18,9 | 16,4 | 17,5 | 2973 | 11,9 | 21,2 |
| material #2 | | | | | | | |
| Excess liquid #2 | 174,6 | 67,3 | 67,8 | 71,6 | 14280,2 | 39,7 | 64,2 |
| Final ingot | 12,1 | 9,3 | 3,5 | 4,7 | 148,7 | 5,4 | 3,9 |
| Units are ppm by weight. | | | | | | | |

Example 7

160 kg of commercial silicon with a Fe content of 5010,0 parts per million (ppm) by weight was heated by induction means at 756 Hz up to 1560 °C, afterwards the furnace was tilted and the melt was tapped into the solidification furnace which was set at a frequency of 21 Hz for 30 minutes and achieving a yield of 80 % solid. Then the liquid was taped into an auxiliary mould following the steps stated in figure 4. The resulting hollow ingot had an iron content of 200.4 ppm by weight.

**Table 9.- Inductively coupled plasma atomic emission spectroscopy (ICP OES) analysis of example 7**

|  | Al | Ca | Cr | Cu | Fe | P | Ti |
|---|---|---|---|---|---|---|---|
| Initial liquid | 442,3 | 453,3 | 9,7 | 13,4 | 5010,0 | 29,3 | 6,3 |
| Excess liquid | 2387 | 2194,2 | 92 | 71,6 | 25947,3 | 201,4 | 47,3 |
| Solid ingot | 4,1 | 7,1 | 4,3 | 1,1 | 200,4 | 14,5 | 4,0 |
| Units are ppm by weight. | | | | | | | |

Example 8

160 kg of 3N silicon with a Fe content of 338.1 parts per million (ppm) by weight was heated by induction means at 756 Hz up to 1560 °C, afterwards the furnace was tilted and the melt was tapped into the solidification furnace which was set at a frequency of 21 Hz for 25 minutes and achieving a yield of 75 % solid. Then the liquid was taped into an auxiliary mould following the steps stated in figure 4. The resulting hollow ingot had an iron content of 12 ppm by weight.

**Table 10.- Inductively coupled plasma atomic emission spectroscopy (ICP OES) analysis of example 8**

|  | Al | Ca | Cr | Cu | Fe | P | Ti |
|---|---|---|---|---|---|---|---|
| Initial liquid | 345,0 | 9,0 | 4,6 | 4,3 | 331,8 | 12,8 | 3,3 |
| Excess liquid | 1707,8 | 16,4 | 21,7 | 17,6 | 1597,1 | 48,6 | 15,4 |
| Solid ingot | 4,3 | 7,4 | 0,6 | 1,2 | 12,0 | 4,3 | 0,5 |
| Units are ppm by weight. | | | | | | | |

Example 9

Exemplary mode of operation when using a melting furnace independent from the crystallisation mould of the invention: Once the silicon has been melted in the melting furnace, the mould must be placed at the end of a melting furnace channel, with a crucible temperature higher than 100°C (figure 6A). This temperature is easily reached 15-20 minutes after the electromagnetic stirrer is started. The melting furnace is then tilted and the liquid silicon is poured at a speed of between 20 and 50 kg/min (figure 6B). After pouring, the furnace should be returned to its normal upright position and the crystallisation mould of the invention will be moved a few meters away from the furnace to facilitate operation (figure 6C). Solidification is then let to occur, which under typical conditions lasts between 20 and 40 minutes. The electromagnetic stirrer creates an alternating current (AC) that induces a rotating electromagnetic force in the liquid silicon. Solidification occurs centripetally in the radial direction, so that a purified silicon ingot grows inwards from the crucible walls and the impurities are concentrated in the liquid phase. The heat released in the solidification of the material is extracted through the walls of the crucible. These walls can be insulated, equipped with means capable of controlling the temperature, or directly exposed to the air. If the crucible material is already a refractory material, the walls could be directly exposed to air.

Once the set time corresponding to a specific degree of solidification of the liquid silicon is reached, the rotator is turned 180° upside down while maintaining the power on for the electromagnetic stirrer. In this position, the liquid metal remains mostly within the vessel due to the effect of the electromagnetic field (figure 6D). When the power is turned off for the electromagnetic stirrer, the liquid silicon falls suddenly into an auxiliary mould, thus emptying the inside of the crystallisation mould (figure 6E). In a final step, the purified hollow ingot is removed (figure 6F).

Example 10

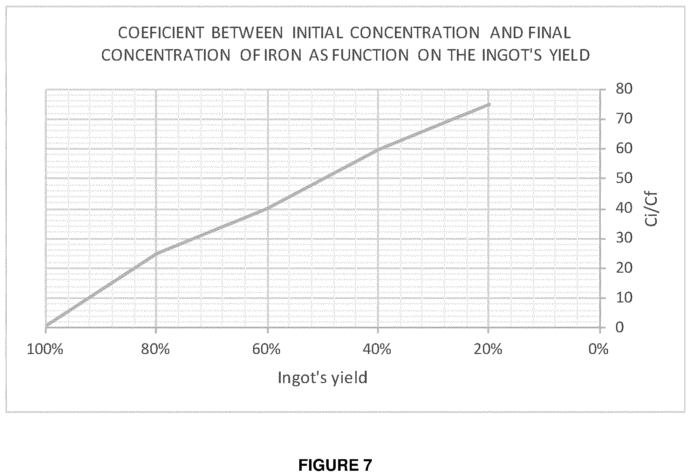

The specific degree of solidification (i.e., percentage of solidification) of the liquid silicon is determined by the desired degree of purity in the solid silicon ingot, since presence of an impurity in the solid ingot increases as the percentage of solidification increases. In particular, the concentration of an impurity in the solid silicon ingot equals the concentration of the impurity in the raw silicon material at the start of the process when the entire liquid silicon has solidified. In the case of iron, figure 7 shows that the concentration of iron in the initial raw silicon material ($C_i$) is higher than the concentration of iron in the solid ingot ($C_f$), expressed as the ratio $C_i/C_f$ as a function of the ingot's yield (i.e., percentage of solidification), except for an ingot's yield value of 100 (that is, when a 100% of the liquid silicon raw material has solidified). For an ingot's yield value of 100, the ratio $C_i/C_f$ is 1. Thus, the specific degree of solidification (i.e., percentage of solidification) of the liquid silicon can be selected depending of the reduction desired for the concentration of the specific impurity in the final solid ingot.

**Claims**

1. A method for obtaining purified silicon metal, the method comprising:

    a) providing liquid silicon in a crystallisation mould having crucible-lined walls,
    b) solidifying the liquid silicon by unidirectional solidification from the crucible-lined walls while stirring the liquid silicon by means of electromagnetic stirring (EMS), until a percentage of the liquid silicon solidifies; and
    c) decanting the excess non-solidified liquid silicon.

2. The method of claim 1, wherein the method comprises a prior step of:

    a) melting silicon from solid silicon directly in the crystallisation mould.

3. The method of claim 1, wherein the method comprises prior steps of:

   a) obtaining liquid silicon from a electrometallurgical reduction furnace where quartz is reduced, or from a melting furnace wherein silicon is melted from solid silicon, and
   b) transferring the liquid silicon into the crystallisation mould.

4. The method according to any one of claims 1 to 3, wherein the solid silicon is in the form of chunks, powder, pellets and/or bricks.

5. The method according to any one of claims 1 to 4, wherein the percentage of the liquid silicon that has solidified is 20 to 90%, preferably 40 to 85%, more preferably 50 to 80%, most preferably 60 to 80%.

6. The method according to any one of claims 1 to 5, wherein the crucible-lined walls comprise a bottom wall and side walls or wherein the crucible-lined walls are of conical or pyramidal shape.

7. The method according to any one of claims 1 to 6, wherein the crucible in the crucible-lined walls is made of a material selected from the group consisting of High Alumina Cement (HAC), Mullite, Silicon carbide (SiC), Graphite, Quartz, refractory SiC composites, refractory metals, preferably iron-alloys, and combinations thereof.

8. The method according to any one of claims 1 to 7, wherein the crucible-lined walls are heated to minimise a formation of a skin of silicon on said crucible-lined walls.

9. The method according to any one of claims 1 to 8, wherein electromagnetic stirring (EMS) is performed at a frequency of 1 to 100 Hz, preferably 1 to 30 Hz, more preferably 1 to 20 Hz, most preferably 2 to 15 Hz.

10. The method according to any one of claims 1 to 9, wherein the solidification speed is $10^{-7}$ to $10^{-4}$ m/s, preferably $10^{-6}$ to $10^{-4}$ m/s.

11. The method according to any one of claims 1 to 10, wherein the method further comprises the step of melting the purified solid silicon metal ingot and repeating steps (a) to (c) of claim 1.

12. A device comprising:

    a) a crystallisation mould;
    b) an electromagnetic stirrer; and
    c) a decanting mechanism.

13. The device according to claim 12, wherein the decanting mechanism is a tilting mechanism.

14. The device according to any one of claims 12 or 13, wherein the device further comprises a dragging mechanism.

15. Use of a device according to any one of claims 12 to 14 in a method for obtaining purified silicon metal.

**FIGURE 1**

FIGURE 2

| HIGH FREQUENCY GENERATOR |
| LOW FREQUENCY GENERATOR |

a)

| HIGH FREQUENCY GENERATOR |
| LOW FREQUENCY GENERATOR |

b)

| HIGH FREQUENCY GENERATOR |
| LOW FREQUENCY GENERATOR |

c)

d)

e)

FIGURE 3

FIGURE 4

a)

b)

c)

d)

e)

b')

**FIGURE 5**

MELTING UNIT          SOLIDIFICATION UNIT

ELECTROMAGNETIC STIRRER

STRUCTURE AND TILTER

CRUCCIBLE

DRAGGING MECHANISM

**FIGURE 6A**

POWER ON

**FIGURE 6B**

**FIGURE 6C**

**FIGURE 6D**

**FIGURE 6E**

**FIGURE 6F**

COEFICIENT BETWEEN INITIAL CONCENTRATION AND FINAL CONCENTRATION OF IRON AS FUNCTION ON THE INGOT'S YIELD

FIGURE 7

Europäisches Patentamt

European Patent Office

Office européen des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/074648 A1 (LEBLANC DOMINIC [CA] ET AL) 19 March 2009 (2009-03-19) | 1,3, 5-12,14, 15 | INV. C01B33/037 |
| Y | * abstract * <br> * claims 1,14,7,9,10 * <br> * figure 2 * <br> * paragraph [0061] * <br> ----- | 13 | |
| X | US 2008/253955 A1 (LEBLANC DOMINIC [CA] ET AL) 16 October 2008 (2008-10-16) <br> * abstract * <br> * claims 1,14,15,17 * <br> ----- | 1-12,14, 15 | |
| Y | US 2006/048698 A1 (HALL ROBERT B [US] ET AL) 9 March 2006 (2006-03-09) <br> * abstract * <br> * paragraphs [0056], [0071] * <br> * figure 1 * <br> ----- | 13 | |

| TECHNICAL FIELDS SEARCHED (IPC) |
|---|
| C01B |

The present search report has been drawn up for all claims

| Place of search | Date of completion of the search | Examiner |
|---|---|---|
| The Hague | 5 October 2021 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 082 966 A1**

## ANNEX TO THE EUROPEAN SEARCH REPORT
## ON EUROPEAN PATENT APPLICATION NO.

EP 21 38 2359

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2021

| Patent document cited in search report | | | Publication date | Patent family member(s) | | | Publication date |
|---|---|---|---|---|---|---|---|
| US 2009074648 | A1 | | 19-03-2009 | AU | 2008299523 | A1 | 19-03-2009 |
| | | | | BR | PI0816972 | A2 | 24-03-2015 |
| | | | | CA | 2695393 | A1 | 19-03-2009 |
| | | | | CN | 101868422 | A | 20-10-2010 |
| | | | | EA | 201070358 | A1 | 30-08-2010 |
| | | | | EP | 2212249 | A1 | 04-08-2010 |
| | | | | ES | 2530720 | T3 | 04-03-2015 |
| | | | | JP | 2010538952 | A | 16-12-2010 |
| | | | | KR | 20100061510 | A | 07-06-2010 |
| | | | | MY | 143807 | A | 15-07-2011 |
| | | | | UA | 97691 | C2 | 12-03-2012 |
| | | | | US | 2009074648 | A1 | 19-03-2009 |
| | | | | WO | 2009033255 | A1 | 19-03-2009 |
| | | | | ZA | 201000882 | B | 28-04-2011 |
| US 2008253955 | A1 | | 16-10-2008 | AU | 2007295860 | A1 | 20-03-2008 |
| | | | | BR | PI0716934 | A2 | 17-09-2013 |
| | | | | CA | 2660386 | A1 | 20-03-2008 |
| | | | | CN | 101511731 | A | 19-08-2009 |
| | | | | EA | 200970275 | A1 | 30-10-2009 |
| | | | | EG | 25136 | A | 25-09-2011 |
| | | | | EP | 2074060 | A1 | 01-07-2009 |
| | | | | GE | P20115178 | B | 10-03-2011 |
| | | | | JP | 2010503596 | A | 04-02-2010 |
| | | | | KR | 20090053807 | A | 27-05-2009 |
| | | | | UA | 97488 | C2 | 27-02-2012 |
| | | | | US | 2008253955 | A1 | 16-10-2008 |
| | | | | WO | 2008031229 | A1 | 20-03-2008 |
| | | | | ZA | 200900898 | B | 30-06-2010 |
| US 2006048698 | A1 | | 09-03-2006 | AU | 2003277041 | A1 | 19-04-2004 |
| | | | | US | 2006048698 | A1 | 09-03-2006 |
| | | | | WO | 2004030044 | A2 | 08-04-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4094731 A
- BR 102013005759 A2
- BR PI0806050 B1
- BR PI0806050 A2
- US 4747906 A
- WO 2009033255 A1

**Non-patent literature cited in the description**

- Role of impurities in solar silicon. **G. L. COLETTI ; D. MACDONALD ; D. YANG.** Advanced Silicon Materials for Photovoltaic Applications. Wiley, 2012, 79-125